# EUROPEAN PATENT SPECIFICATION

(11) **EP 4 398 174 B1**
(45) Date of publication and mention of the grant of the patent: **08.04.2026**
(21) Application number: 24150874.6
(22) Date of filing: 09.01.2024
(51) Int. Cl.: G06Q 30/018, G06Q 30/0207, G06Q 40/04, G06Q 50/40, B60L 58/12, B60L 15/20

(54) **MOTOR ELECTRICAL POWER CONSUMPTION BASED MOBILE VEHICLE CARBON EMISSION COMPUTATION METHOD**
AUF ELEKTRISCHEM STROMVERBRAUCH BASIERENDES VERFAHREN ZUR BERECHNUNG DER KOHLENSTOFFEMISSION EINES MOBILEN FAHRZEUGS
PROCÉDÉ DE CALCUL D'ÉMISSION DE CARBONE DE VÉHICULE MOBILE BASÉ SUR LA CONSOMMATION D'ÉNERGIE ÉLECTRIQUE D'UN MOTEUR

(30) Priority: 09.01.2023 TW 112100816
(43) Date of publication of application: 10.07.2024
(73) Proprietor: Yao, Li-Ho, 106 Taipei City (TW)
(72) Inventor: Yao, Li-Ho, 106 Taipei City (TW)
(74) Representative: Horak, Michael

(56) References cited:
- EP-A1- 2 662 822
- WO-A1-2015/049969
- CA-A1- 3 174 469
- CN-A- 111 680 936
- CN-A- 114 062 759
- US-A1- 2015 025 727
- US-A1- 2021 248 694
- US-A1- 2021 291 803

## Description

### TECHNICAL FIELD OF THE INVENTION

The present invention belongs to the technical field of computation of mobile vehicle carbon emission.

### DESCRIPTION OF THE PRIOR ART

Heretofore, carbon emission of an electrical vehicle is calculated on the basis of consumption of electrical energy of an electrical battery during a journey. Methods that are commonly adopted for measuring electrical power of an electrical battery mainly include (1) externally measuring the voltage of a battery set; and (2) applying a battery management system inside a battery set to measure the voltage. However, when the loading is suddenly increased (output current being increased), the voltage of the battery drops down, so that there may be faults if the voltage is used solely in determining the residual power. Further, during a period of use, the battery is repeatedly charged and discharged, and consequently, the battery pack becomes deteriorating, resulting in an increase of internal resistance, and this also causes faults in the determination of electrical power. To alleviate the problem of battery pack deterioration, lithium-iron battery packs that are capable of being charged and discharged for more times have been widely used. However, the characteristics of the lithium-iron battery are such that the voltage variation is relatively small during the processes of charging and discharging, and this similarly results in difficulty of accurately estimating the residual electrical power of the battery.

In other words, when the residual power of a battery is mistakenly estimated, calculation of the electrical power of the battery that has been consumption is also incorrect, and this results in mistaken calculation of the carbon emission of an electrical vehicle during each journey thereof. Further, the calculation of the carbon emission that is implemented currently is constrained by transmission bandwidth and speed, and server capacity and the calculation of carbon emission of a journey of the electrical vehicle can only be computed by taking the distance of the journey and the residual capacities of power at starting and ending of the journey as a calculation basis. This leaves room for counterfeiting and cheating, and consequently, the carbon emission cannot be truly and correctly computed. The invention is made to overcome the above problems.

Prior art documents are known, such as CA 3 174 469 A1 and US 2021/291803 A1. CA 3 174 469 A1 discloses a transportation system that can represent a set of operating states of a vehicle to a user of the vehicle and generally includes a system for representing a set of operating states of a vehicle to a user of the vehicle. The system includes a portion of the vehicle having a vehicle operating state; a digital twin system receiving vehicle parameter data from one or more inputs to determine the vehicle operating state; and an interface for the digital twin system to present the vehicle operating state to the user of the vehicle. US 2021/291803 A1 discloses a predictive power control system for hybrid vehicles. The system is mainly specific to the application scenarios of long-distance freight heavy trucks. Based on the vehicle configuration parameters and the current operating conditions, and with the aid of a vehicle-mounted expressway electronic navigation three-dimensional map, the system can be used to accurately and real-timely predict the dynamic road load power time-space function within the range of tens of kilometers of the electronic horizon in front of the vehicle; an electric power shunt device is commanded through a vehicle controller, and the flow direction and amplitude of 100-kilowatt level electric power can be accurately and continuously adjusted among an engine-driven generator set, a battery pack and a driving motor within tens of milliseconds of system response time so that an engine works stably in the high efficiency area of the engine for a long time; and the road load transient power balance required by a vehicle dynamic equation can be met through hundreds of kilowatts of fast charging and discharging of the battery pack in real time. CN 111 680 936 A discloses a motor electrical power consumption based mobile vehicle carbon emission computation method, wherein a central processing unit configured to trigger journey activation electrical power consumption calculation after the motor is externally triggered by the user, according to the state of the art.

### SUMMARY OF THE INVENTION

The primary objective of the present invention is to use technology of high frequency measurement, peripheral computation, and summing operation to greatly increase calculation accuracy of carbon emission for each journey, so as to allow all the people to well use of green mobile vehicles, to effectively engage in trading of carbon credit, and also to create sharing economics for carbon credit market.

Another objective of the present invention is to adopt a means of high frequency measurement to inspect, according to whether current and voltage applied by a control module into a motor correspond to variation and change of position information, a true situation of use, in order to reduce events of counterfeiting and cheating for carbon emission to truly achieve the purposes of reducing greenhouse gases.

A further objective of the present invention is to use peripheral computation technology to reduce bandwidth loading for uploading to cloud and to increase the uploading speed to further reduce the loading of operation, storage, and processing of the cloud server.

In an aspect, the invention provides a motor electrical power consumption based mobile vehicle carbon emission computation method, which is applicable to a control module of a mobile vehicle that is operable to control a battery set to drive a motor, the control module at least comprising a central processing unit, and a storage unit, a motor control unit that controls the motor, at least one detection unit that detects a voltage and a current of the battery set, a timer unit, a GPS module that is connectable with at least one external positioning satellite system, and a communication unit that transmits data to at least one external cloud server, all in connection with the central processing unit, wherein the storage unit further comprises a summation operation unit and a data consolidation unit, steps of the carbon emission computation method comprising: (a) the central processing unit operating for supplying electricity to mobile vehicle to start journey: the central processing unit operating for activating the battery set to prepare to supply a current and a voltage to the control module to execute a journey, and waiting for a user externally triggering the motor to drive a motion of the mobile vehicle, and then going to Step (b); (b) the central processing unit triggering journey activation electrical power consumption calculation: after the motor is externally triggered by the user, using the detection unit to detect if rise of an instantaneous voltage of supplying electricity from the battery set to drive the motor extending for a time period that reaches a set value of the timer unit, by which internal triggering is achieved for going on to Step (c), and also the central processing unit calculating electrical power consumption of the external triggering, the electrical power consumption of the external triggering being defined as triggering electrical power consumption and stored in the storage unit, wherein step (b) is implemented by journey starting, transmitting starting data to cloud server, such as summed electrical power consumption and current position information, setting triggering condition, calculating instantaneous unit electric power consumption and summing up to generate summed electrical power consumption; (c) the central processing unit acquiring unit frequency measurement parameter of journey according to set high frequency: using the GPS module to read, according to a high frequency set by the timer unit, position information of the mobile vehicle, and the detection unit measuring, according to a set high frequency, the current and the voltage supplied to the control module, and going to Step (d); (d) the central processing unit calculating unit electrical power consumption: calculating electrical power consumption of the motor according to the current and the voltage measured by the detection unit, the electrical power consumption being defined as unit electrical power consumption, and going to Step (e); (e) the central processing unit summing up unit electrical power consumption of journey to generate summed electrical power consumption for uploading to the cloud server through the communication unit: according to a set condition for uploading time, the central processing unit summing up unit electrical power consumptions that are already calculated but not summed up to generate a summed electrical power consumption, and uploading the summed electrical power consumption and the position information to the cloud server through the communication unit, and going to Step (f); (f) the central processing unit determining if triggering of journey ending is received: determining whether or not triggering for journey ending is received, and Step (c) to Step (e) are cyclically executed if triggering of ending journey is not received, and otherwise, going to Step (g) if triggering of ending journey is received; and (g) journey ending: the central processing unit uploading final data through the communication unit, including, but not limited to the summed electrical power consumption and the position information, to the designated cloud server when the triggering of journey ending is received, so that the cloud server converts the triggering electrical power consumption, the summed electrical power consumption, and the position information uploaded in the journey into carbon emissions for summing up to form a journey total carbon emission for subsequent carbon credit trading operations.

In another aspect, the present invention provides a control module for executing the motor electrical power consumption based mobile vehicle carbon emission computation method discussed above, comprising a motor control board and a communication control board, wherein the motor control board comprises a central processing unit, and a memory unit, a motor control unit operating and controlling the motor, at least one detection unit that detects the voltage and current of the battery set, a timer unit, and a first transmission unit, all connected with the central processing unit, wherein the memory unit further comprises a summation operation unit, and the communication control board comprises a processing core unit, and a storage unit, a timer unit, a GPS module that is connectable with at least one external positioning satellite system, a second transmission unit that is connectable with the first transmission unit, and a communication unit that transmits data to at least one external cloud server, all connected with the processing core unit, wherein the storage unit further comprises a data consolidation unit.

### BRIEF DESCRIPTION OF THE DRAWINGS

FIG. 1 is a schematic view showing system architecture of a preferred embodiment of the present invention.
FIG. 2 is a schematic view showing system architecture of another preferred embodiment of the present invention.
FIG. 3 is a schematic view showing a flow of a method according to the present invention.
FIG. 4 is a schematic view showing application architecture of actual implementation of the present invention.
FIG. 5 is a schematic view showing an application flow of actual implementation of the present invention.

### DETAILED DESCRIPTION OF THE PREFERRED EMBODIMENT

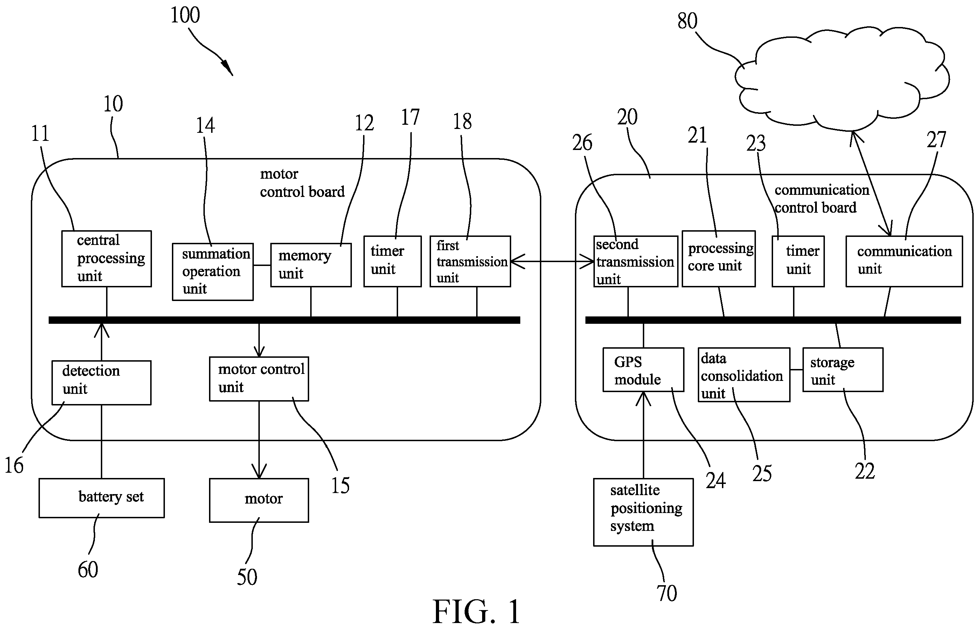

As shown in FIG. 1, the present invention is applicable to a control module 100 that is operable to control a motor 50 and a battery set 60 of a mobile vehicle. The control module 100 comprises a motor control board 10 and a communication control board 20. The motor control board 10 includes a central processing unit 11, and a memory unit 12, a motor control unit 15, at least one detection unit 16, a timer unit 17, and a first transmission unit 18 connected with the central processing unit 11, wherein the central processing unit 11 is configured for executing and processing various programs, data, and instructions, and the memory unit 12 is configured for storing programs, consumed electrical energy [referring to as electrical power consumption hereinafter] calculation formulas, measurement data, and summation calculation result data, and also, the memory unit 12 further comprises a summation operation unit 14 that is configured for summing up multiple electrical power consumption calculation results of a same journey, and further, the motor control unit 15 is configured for connecting with an external motor 50 to operate and control operation of the motor 50, and further, the detection units 16 are connected to the battery set 60 that is arranged externally for supplying electrical power to the control module 100 to measure input current and voltage that the battery set 60 applies through the control module 100 to drive the motor 50, and further, the timer unit 17 is configured for setting a frequency at which the detection units 16 are operated and controlled to measure voltage and current input from the battery set 60 for calculation of the electrical power consumption, and further, the first transmission unit 18 is configured for mutual data transmission of the motor control board 10 and the communication control board 20, and according to some embodiments, the central processing unit **11,** the memory unit 12, the motor control unit 15, the timer unit 17, and/or the first transmission unit 18 are an integrated semiconductor device.

The communication control board 20 includes a processing core unit 21, and a storage unit 22, a timer unit 23, a GPS module 24, a second transmission unit 26, and a communication unit 27 connected with the processing core unit 21, wherein the processing core unit 21 is configured for executing and processing various programs, data, and instructions, and the storage unit 22 is configured for storing programs and various sorts of data, and also, the storage unit 22 further comprises a data consolidation unit 25 that consolidates a summation result of electrical power consumption of a same journey, and journey position and distance, and further, the GPS module 24 is configured for connecting with at least one external positioning satellite system 70 to read journey position and distance, and further, the second transmission unit 26 is configured for connecting with the first transmission unit 18 of the motor control board 10 for mutual data transmission, and the communication unit 27 is configured for connecting, through a network, with an external cloud server 80 for data uploading, and further, the timer unit 23 is configured for setting a frequency at which the GPS module 24 is operated to read the journey position and distance and the communication unit 27 is operated for data uploading, and further, according to some embodiments, the processing core unit 21, the storage unit 22, the timer unit 23, the second transmission unit 26, and/or the communication unit 27 are an integrated semiconductor device.

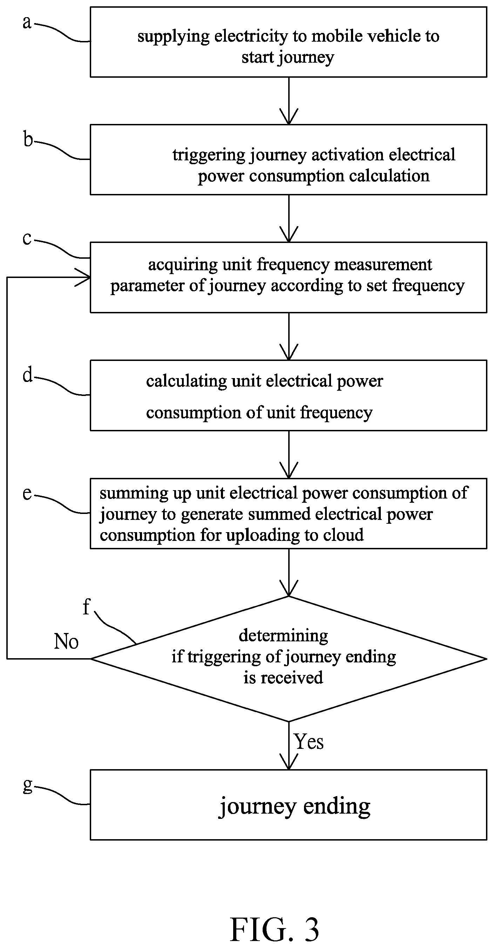

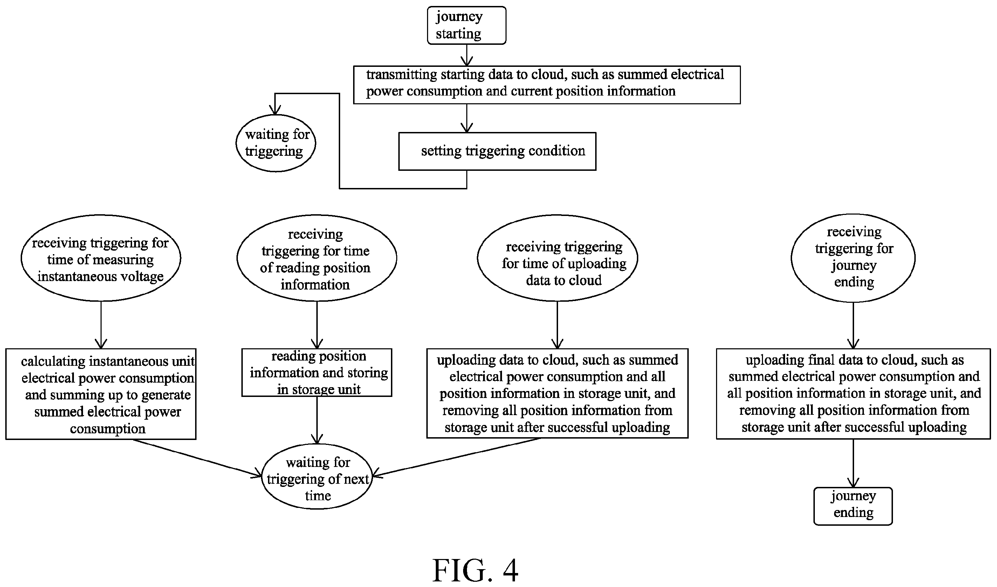

In practical application of the present invention, as shown in FIGS. 1, 3, and 4, the control module 100 is used to calculate, by means of peripheral technology through high frequency measurement, the electrical power consumption of the battery set 60 for driving the motor 50 in a same journey of a mobile vehicle, and summing up a total of the journey to generate a journey electrical power consumption, and uploading journey carbon emission converted from the journey electrical power consumption for trade of carbon credit, and before the present invention is used, various settings for operation and control are made in advance in programs executed by the central processing unit 11 of the motor control board 10 and the processing core unit 21 of the communication control board 20 of the control module 100, at least including setting of triggering condition [the time of instantaneous voltage value of the battery set 60 supplying electricity to the control module 100 at activation, such as 0.1 seconds], setting of measurement frequency [time interval for each time measuring voltage and current, such as one measurement per every 0.1 seconds], and setting of reading frequency [time interval for each time reading position and distance, such as one reading per every 10 seconds] and setting of uploading time [time interval for each time uploading data, such as one uploading per every 60 second], and the steps of a flow of a motor electrical power consumption based mobile vehicle carbon emission computation method according to the present invention are as follows:
(a) supplying electricity to mobile vehicle to start journey: when a mobile vehicle is prepared for executing a journey, electrical power of the mobile vehicle is first activated, and the communication unit 27 of the communication control board 20 starts executing transmission of journey starting data of the mobile vehicle stored in the memory unit 12 and the storage unit 22 of the motor control board 10 and the communication control board 20 to the cloud, including, but not limited to, summed electrical power consumption and position information, and waiting for a user to externally trigger the motor 50 to drive the mobile vehicle to execute Step (b);
(b) triggering journey activation electrical power consumption calculation: when the user triggers the motor 50 to drive the mobile vehicle after electricity is supplied to the mobile vehicle, an input current of the battery set 60 is applied through the control module 100 to drive the motor 50, and when the detection units 16 of the motor control board 10 detect rise maintaining time of the instantaneous voltage of electrical power supplied from the battery set 60 to drive the motor 50 reaches a set value [0.1 seconds] of the timer unit 17, the system is internally triggered to execute Step (c), and the central processing unit 11 of the motor control board 10 uses electrical power consumption programs stored in the memory unit 12 to calculate the electrical power consumption externally triggering the motor 50, the electrical power consumption of externally triggering being defined as triggering electrical power consumption and stored in the memory unit 12;
(c) acquiring unit frequency measurement parameter of journey according to set frequency: when the mobile vehicle is triggered and driven, the communication control board 20 of the control module 100 uses the GPS module 24 to read, according to the set frequency of the timer unit 23 [such as every 10 seconds], position information of the mobile vehicle, and stores the position information of each unit frequency sequentially in the storage unit 22, and the detection units 16 of the motor control board 10 measure, according to the set frequency of the timer unit 17 [such as every 0.1 seconds], parameters of current and voltage inputted from the battery set 60 to the control module 100, and stores the parameters of current and voltage of each unit frequency sequentially in a buffer of the memory unit 12 for subsequent execution of Step (d);
(d) calculating unit electrical power consumption of unit frequency: after the acquisition of the measurement parameters of unit frequency, the electrical power consumption programs in the central processing unit 11 of the motor control board 10 calculate, according to the parameters of current and voltage, the electrical power consumption of the motor 50 for each unit frequency, and the electrical power consumption of the unit frequency is defined as unit electrical power consumption, and each unit electrical power consumption is stored sequentially in the memory unit 12 for subsequent execution of Step (e);
(e) summing up unit electrical power consumption of journey to generate summed electrical power consumption for uploading to cloud: after completion of calculation of multiple unit electrical power consumptions, according to set condition of uploading time, such as one uploading per every 60 seconds, a summation operation is applied to the unit electrical power consumptions that have been calculated but have not yet been summed up to generate a summed electrical power consumption, and the communication unit 27 of the communication control board 20 uploads the summed electrical power consumption and position information stored in the memory unit 12 and the storage unit 22 to a designated cloud server 80, and also removes the already-uploaded position information from the storage unit 22 after successful uploading, and executing Step (f);
(f) determining if triggering of journey ending is received: after completion of uploading of each summed electrical power consumption, a determination is made as to whether or not triggering of journey ending is received, and if the system does not receive ending of the journey, cyclically executing Step (c) to Step (e), otherwise when triggering of ending of the journey is received, executing Step (g); and
(g) journey ending: when the system receives triggering of journey ending, such as the battery set 60 of the mobile vehicle terminating input of current to the control module 100, the communication unit 27 of the communication control board 20 uploads final data in the memory unit 12 and the storage unit 22 of the motor control board 10 and the communication control board 20 to the designated cloud server 80, including, but not limited to, summed electrical power consumption and position information, and also, removes the already-uploaded position information from the storage unit 22 when the uploading is successful, and ends the journey, to allow the designated cloud server 80 to convert, through calculation, the triggering electrical power consumption, the multiple summed electrical power consumptions, and multiple pieces of position information of the journey of the mobile vehicle that are so uploaded into carbon emissions, and summing up to form a journey total carbon emission for subsequent operation of trading of carbon credit.

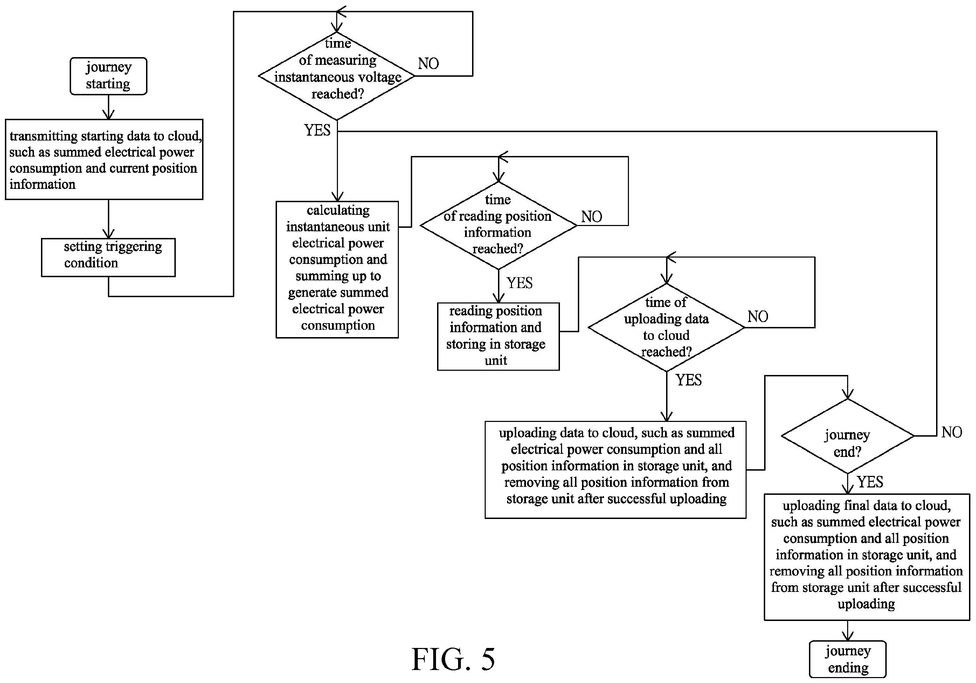

As shown in FIG. 5, which shows an operation flow of a preferred embodiment of the present invention, when the mobile vehicle starts a journey, the control module 100 transmits starting data to a designated cloud server 80, such as the summed electrical power consumption not removed from the memory unit 12 and current position information in the storage unit 22; and determines if time of instantaneous voltage inputted from the battery set 60 at the moment of triggering of activation of the motor 50 reaches a set value, and if not, continuing to wait for triggering, otherwise applying measurement of the instantaneous voltage and current to calculate the triggering electrical power consumption, and calculating the unit electrical power consumption of said unit frequency and sequentially summing up the unit electrical power consumptions to generated a summed electrical power consumption, and continuing to determine if time of reading position information is reached, and if not reaching the condition, then continuing to wait for the reading time of the next unit frequency, otherwise if the reading time of the unit frequency is reached, then reading position information for storing in the storage unit 22, and continuing to determine if time of uploading data to the cloud is reached, and if not, repeatedly executing executes determining time for measuring instantaneous voltage and current and reading position information is reached, otherwise if the uploading time is reached, then uploading data to the cloud, including, but not limited to, the summed electrical power consumption and position information, and removing the already-uploaded position information after successful uploading, and then continuing to determine if the journey ends, and if not yet ending the journey, then repeatedly executing determining time of measuring instantaneous voltage and current and reading position information and uploading data is reached, otherwise if ending journey is triggered, then uploading final data to the cloud, including, but not limited to, the triggering electrical power consumption, the summed electrical power consumption, and position information, and removing the already-uploaded position information after successful uploading, meanwhile ending the journey.

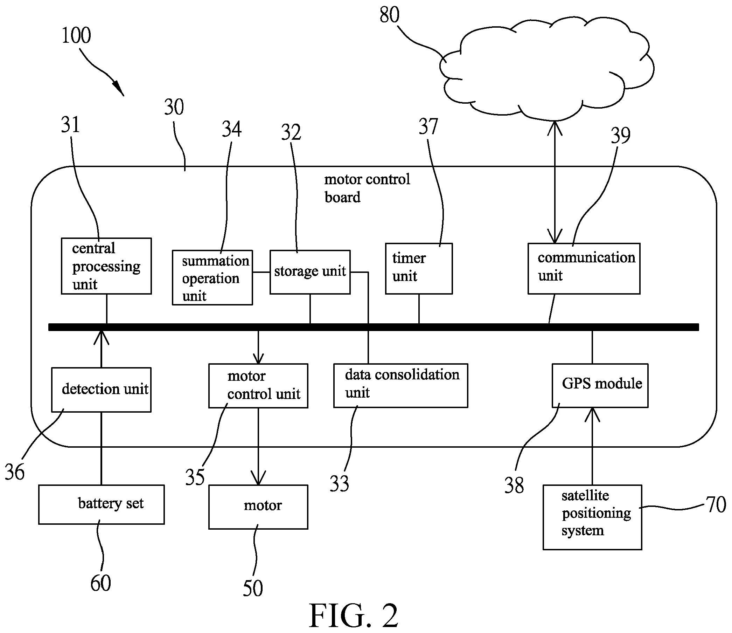

According to some embodiments, as shown in FIG. 2, the control module 100 is formed of a motor control board 30, and the motor control board 30 includes a central processing unit 31, and a storage unit 32, a motor control unit 35, at least one detection unit 36, a timer unit 37, a GPS module 38, and a communication unit 39 connected with the central processing unit 31, wherein the central processing unit 31 is configured for executing and processing various programs, data, and instructions, and the motor control unit 35 is configured for connecting with an external motor 50 to operate and control operation of the motor 50, and further, the detection units 36 are connected with the battery set 60 that is externally arranged for supplying electricity to the control module 100 to measure input current and voltage from the battery set 60 for driving the motor 50, and the storage unit 32 is configured for storing programs, electrical power consumption calculation formulas, measurement data and summation calculation result data, and also, the storage unit 32 further comprises a summation operation unit 34 that is configured for summing up multiple results of calculation of electrical power consumption of a same journey and a data consolidation unit 33 that is configured for consolidating the summed result of electrical power consumption of the journey, and the journey position and distance, and further, the GPS module 38 is configured for connecting with an external positioning satellite system 70 for reading journey position and distance, and further, the communication unit 39 is configured for connecting, through a network, with an external cloud server 80 for data uploading, and further, the timer unit 37 is configured for setting a frequency at which the detection units 36 are operated to measure input voltage and current of the battery set 60 for calculating electrical power consumption and a frequency at which the GPS module 38 reads the journey position and distance from the positioning satellite system 70, and a frequency at which the communication unit 39 uploads data, this being similarly applied to execute the carbon emission computation method of the present invention.

It can be appreciated from the above that the present invention uses the control module 100 to read, with high frequency, position information, and to calculate unit electrical power consumption through measurement, with high frequency, of voltage and current inputted from the battery set 60 to the control module 100, and to sum up the unit electrical power consumptions to form a summed electrical power consumption and subsequently uploading all the summed electrical power consumptions of a journey and corresponding position information to the cloud for conversion into carbon emission of the journey, and by means of high frequency measurement and summing-up operation, the accuracy of consumption of electrical power of the mobile vehicle is the journey can be increased, without causing faulty estimation of the carbon emission of each journey, and peripheral computation technology is adopted for reducing bandwidth loading for uploading to the cloud and increasing the uploading speed to further reduce the loading of the cloud server for operation, storage, and processing data, and by adopting a means of high frequency measurement to inspect whether current and voltage applied by the control module 100 into the motor 50 correspond to variation and change of position information, a true situation of use can be verified, in order to reduce room of counterfeiting and cheating, allowing the carbon emission of the mobile vehicle to be truly and correctly computed for applying to carbon credit trading of green mobile vehicles to allow the issue of greenhouse gas reduction to be truly resolved and to create and invigorate the green mobile vehicle industry.

## Claims

1. A motor electrical power consumption based mobile vehicle carbon emission computation method, which is applicable to a control module (100) of a mobile vehicle that is operable to control a battery set (60) to drive a motor (50), the control module (100) at least comprising a central processing unit (31), and a storage unit (32), a motor control unit (35) that controls the motor (50), at least one detection unit (36) that detects a voltage and a current of the battery set (60), a timer unit (37), a GPS module (38) that is connectable with at least one external positioning satellite system (70), and a communication unit (39) that transmits data to at least one external cloud server (80), all in connection with the central processing unit (31), wherein the storage unit (32) further comprises a summation operation unit (34) and a data consolidation unit (33), steps of the carbon emission computation method comprising:
(a) the central processing unit (31) operating for supplying electricity to mobile vehicle to start journey: the central processing unit (31) operating for activating the battery set (60) to prepare to supply a current and a voltage to the control module (35) to execute a journey, and waiting for a user externally triggering the motor (50) to drive a motion of the mobile vehicle, and then going to Step (b);
(b) the central processing unit (31) triggering journey activation electrical power consumption calculation: after the motor (50) is externally triggered by the user, using the detection unit (36) to detect if rise of an instantaneous voltage of supplying electricity from the battery set (60) to drive the motor (50) extending for a time period that reaches a set value of the timer unit, by which internal triggering is achieved for going on to Step (c), and also the central processing unit (31) calculating electrical power consumption of the external triggering, the electrical power consumption of the external triggering being defined as triggering electrical power consumption and stored in the storage unit, wherein step (b) is implemented by journey starting, transmitting starting data to cloud server, such as summed electrical power consumption and current position information, setting triggering condition, calculating instantaneous unit electric power consumption and summing up to generate summed electrical power consumption;
(c) the central processing unit (31) acquiring unit frequency measurement parameter of journey according to set high frequency: using the GPS module (38) to read, according to a high frequency set by the timer unit (37), position information of the mobile vehicle, and the detection unit (36) measuring, according to a set high frequency, the current and the voltage supplied to the control module (100), and going to Step (d);
(d) the central processing unit (31) calculating unit electrical power consumption: calculating electrical power consumption of the motor (50) according to the current and the voltage measured by the detection unit (36), the electrical power consumption being defined as unit electrical power consumption, and going to Step (e);
(e) the central processing unit (31) summing up unit electrical power consumption of journey to generate summed electrical power consumption for uploading to the cloud server (80) through the communication unit (39): according to a set condition for uploading time, the central processing unit (31) summing up unit electrical power consumptions that are already calculated but not summed up to generate a summed electrical power consumption, and uploading the summed electrical power consumption and the position information to the cloud server (80) through the communication unit (39), and going to Step (f);
(f) the central processing unit (31) determining if triggering of journey ending is received: determining whether or not triggering for journey ending is received, and Step (c) to Step (e) are cyclically executed if triggering of ending journey is not received, and otherwise, going to Step (g) if triggering of ending journey is received; and
(g) journey ending: the central processing unit (31) uploading final data through the communication unit (39), including, but not limited to the summed electrical power consumption and the position information, to the designated cloud server (80) when the triggering of journey ending is received,-so that the cloud server (80) converts the triggering electrical power consumption, the summed electrical power consumption, and the position information uploaded in the journey into carbon emissions for summing up to form a journey total carbon emission for subsequent carbon credit trading operations.

2. The motor electrical power consumption based mobile vehicle carbon emission computation method according to claim 1, wherein the set value of the timer unit for detecting the rise maintaining time of the instantaneous voltage for driving the motor (50) in Step (b) of triggering journey activation electrical power consumption calculation is 0.1 seconds.

3. The motor electrical power consumption based mobile vehicle carbon emission computation method according to claim 1, wherein the high frequency set by the timer unit (37) for the GPS module (38) in Step (c) of acquiring unit frequency measurement parameter of journey according to set high frequency is to read the position information of the mobile vehicle one time for every 10 seconds.

4. The motor electrical power consumption based mobile vehicle carbon emission computation method according to claim 1, wherein the high frequency set by the timer unit (37) for the detection unit (36) in Step (c) of acquiring unit frequency measurement parameter of journey according to set high frequency is to measure information of current and voltage inputted into the control module (100) from the battery set (60) one time for every 0.1 seconds.

5. The motor electrical power consumption based mobile vehicle carbon emission computation method according to claim 1, wherein the uploading time in Step (e) of summing up unit electrical power consumption of journey to generate summed electrical power consumption for uploading to cloud is uploading one time every 60 seconds.

6. A control module (100) for executing the motor electrical power consumption based mobile vehicle carbon emission computation method of claim 1, comprising a motor control board (10) and a communication control board (20), wherein the motor control board (10) comprises a central processing unit (11), and a memory unit (12), a motor control unit (15) operating and controlling the motor (50), at least one detection unit (16) that detects the voltage and current of the battery set (60), a timer unit (17), and a first transmission unit (18), all connected with the central processing unit (11), wherein the memory unit (12) further comprises a summation operation unit (14), and the communication control board (20) comprises a processing core unit (21), and a storage unit (22), a timer unit (23), a GPS module (24) that is connectable with at least one external positioning satellite system (70), a second transmission unit (26) that is connectable with the first transmission unit (18), and a communication unit (27) that transmits data to at least one external cloud server (80), all connected with the processing core unit (21), wherein the storage unit (22) further comprises a data consolidation unit (25).

## Patentansprüche

1. Verfahren zur Berechnung der Kohlenstoffemissionen mobiler Fahrzeuge basierend auf dem Stromverbrauch des Motors, das auf ein Steuerungsmodul (100) eines mobilen Fahrzeugs anwendbar ist, das zur Steuerung eines Batteriesatzes (60) zum Antreiben eines Motors (50) betrieben werden kann, wobei das Steuerungsmodul (100) mindestens eine zentrale Verarbeitungseinheit (31) und eine Speichereinheit (32), eine Motorsteuerungseinheit (35), die den Motor (50) steuert, mindestens eine Erkennungseinheit (36), die eine Spannung und einen Strom des Batteriesatzes (60) erkennt, eine Timer-Einheit (37), ein GPS-Modul (38), das mit mindestens einem externen Positionierungs-Satellitensystem (70) verbunden werden kann, und eine Kommunikationseinheit (39) umfasst, die Daten an mindestens einen externen Cloud-Server (80) überträgt, die alle in Verbindung mit der zentralen Verarbeitungseinheit (31) stehen, wobei die Speichereinheit (32) ferner eine Summationsoperationseinheit (34) und eine Datenkonsolidierungseinheit (33) umfasst, wobei die Schritte des Verfahrens zur Berechnung der Kohlenstoffemissionen Folgendes umfassen:
(a) die zentrale Verarbeitungseinheit (31) ist in Betrieb, um das mobile Fahrzeug mit Elektrizität zu versorgen, um die Fahrt zu beginnen: die zentrale Verarbeitungseinheit (31) ist in Betrieb, um den Batteriesatz (60) zu aktivieren, um die Zufuhr von Strom und Spannung zu dem Steuerungsmodul (35) vorzubereiten, um eine Fahrt auszuführen, und wartet darauf, dass ein Benutzer den Motor (50) extern auslöst, um eine Bewegung des mobilen Fahrzeugs anzutreiben, und geht dann zu Schritt (b) über;
(b) die zentrale Verarbeitungseinheit (31) löst die Berechnung des Stromverbrauchs der Fahrtaktivierung aus: nachdem der Motor (50) von dem Benutzer extern ausgelöst wurde, Verwenden der Erkennungseinheit (36), um zu erkennen, ob sich ein Anstieg einer momentanen Spannung der Stromversorgung von dem Batteriesatz (60) zum Antreiben des Motors (50) über einen Zeitraum erstreckt, der einen eingestellten Wert der Timer-Einheit erreicht, wodurch das interne Auslösen für das Übergehen zu Schritt (c) erreicht wird, und die zentrale Verarbeitungseinheit (31) auch den Stromverbrauch der externen Auslösung berechnet, wobei der Stromverbrauch der externen Auslösung als Auslösestromverbrauch definiert ist und in der Speichereinheit gespeichert wird, wobei Schritt (b) durch den Start der Fahrt implementiert wird,
Übertragen von Startdaten an den Cloud-Server, z. B. den summierten Stromverbrauch und aktuelle Positionsinformationen, Einstellen der Auslösebedingung, Berechnen des momentanen Stromverbrauchs einer Einheit und Summieren zum Erzeugen des summierten Stromverbrauchs;
(c) die zentrale Verarbeitungseinheit (31) erfasst die Frequenzmessparameter einer Einheit einer Fahrt gemäß der eingestellten Hochfrequenz: Verwenden des GPS-Moduls (38), um gemäß einer von der Timer-Einheit (37) eingestellten Hochfrequenz Positionsinformationen des mobilen Fahrzeugs zu lesen, und wobei die Erkennungseinheit (36) gemäß einer eingestellten Hochfrequenz den Strom und die Spannung misst, die dem Steuerungsmodul (100) zugeführt werden, und Übergehen zu Schritt (d);
(d) die zentrale Verarbeitungseinheit (31) berechnet den Stromverbrauch einer Einheit: Berechnen des Stromverbrauchs des Motors (50) gemäß dem von der Erkennungseinheit (36) gemessenen Strom und der Spannung, wobei der Stromverbrauch als Stromverbrauch einer Einheit definiert ist, und Übergehen zu Schritt (e);
(e) die zentrale Verarbeitungseinheit (31) summiert den Stromverbrauch der Einheit einer Fahrt, um einen summierten Stromverbrauch zum Hochladen in den Cloud-Server (80) über die Kommunikationseinheit (39) zu erzeugen: gemäß einer eingestellten Bedingung für die Hochladezeit summiert die zentrale Verarbeitungseinheit (31) die bereits berechneten, aber nicht summierten Stromverbräuche einer Einheit, um einen summierten Stromverbrauch zu erzeugen, und lädt den summierten Stromverbrauch und die Positionsinformationen in den Cloud-Server (80) über die Kommunikationseinheit (39) hoch, und geht zu Schritt (f) über;
(f) die zentrale Verarbeitungseinheit (31) bestimmt, ob das Auslösen des Fahrtendes empfangen wurde: Bestimmen, ob das Auslösen des Fahrtendes empfangen wurde oder nicht, und Schritt (c) bis Schritt (e) werden zyklisch ausgeführt, wenn das Auslösen des Fahrtendes nicht empfangen wurde, und andernfalls Übergehen zu Schritt (g), wenn das Auslösen des Fahrtendes empfangen wurde; und
(g) Fahrtende: die zentrale Verarbeitungseinheit (31) lädt die endgültigen Daten, einschließlich, aber nicht darauf beschränkt, des summierten Stromverbrauchs und der Positionsinformationen über die Kommunikationseinheit (39) in den bestimmten Cloud-Server (80) hoch, wenn das Auslösen des Fahrtendes empfangen wurde, so dass der Cloud-Server (80) den auslösenden Stromverbrauch, den summierten Stromverbrauch und die während der Fahrt hochgeladenen Positionsinformationen in Kohlenstoffemissionen umwandelt, um diese zu summieren, um die gesamten Kohlenstoffemissionen der Fahrt für nachfolgende Handelsgeschäfte mit Emissionszertifikaten zu bilden.

2. Verfahren zur Berechnung der Kohlenstoffemissionen mobiler Fahrzeuge basierend auf dem Stromverbrauch des Motors nach Anspruch 1,
wobei der eingestellte Wert der Timer-Einheit zum Erkennen der Anstiegshaltezeit der momentanen Spannung zum Antreiben des Motors (50) in Schritt (b) der Berechnung des Stromverbrauchs für das Auslösen der Fahrtaktivierung 0,1 Sekunden beträgt.

3. Verfahren zur Berechnung der Kohlenstoffemissionen mobiler Fahrzeuge basierend auf dem Stromverbrauch des Motors nach Anspruch 1,
wobei die Hochfrequenz, die von der Timer-Einheit (37) für das GPS-Modul (38) in Schritt (c) des Erfassens des Frequenzmessparameters einer Einheit der Fahrt gemäß der eingestellten Hochfrequenz eingestellt wird, dazu dient, die Positionsinformationen des mobilen Fahrzeugs einmal alle 10 Sekunden zu lesen.

4. Verfahren zur Berechnung der Kohlenstoffemissionen mobiler Fahrzeuge basierend auf dem Stromverbrauch des Motors nach Anspruch 1,
wobei die Hochfrequenz, die von der Timer-Einheit (37) für die Erkennungseinheit (36) in Schritt (c) des Erfassens des Frequenzmessparameters einer Einheit der Fahrt gemäß der eingestellten Hochfrequenz eingestellt wird, dazu dient, Informationen über den Strom und die Spannung, die von dem Batteriesatz (60) in das Steuerungsmodul (100) eingegeben werden, einmal alle 0,1 Sekunden zu messen.

5. Verfahren zur Berechnung der Kohlenstoffemissionen mobiler Fahrzeuge basierend auf dem Stromverbrauch des Motors nach Anspruch 1,
wobei die Hochladezeit in Schritt (e) des Summierens des Stromverbrauchs einer Einheit der Fahrt zum Erzeugen des summierten Stromverbrauchs zum Hochladen in die Cloud ein Hochladen alle 60 Sekunden beträgt.

6. Steuerungsmodul (100) zum Ausführen des Verfahrens zur Berechnung der Kohlenstoffemissionen mobiler Fahrzeuge basierend auf dem Stromverbrauch des Motors nach Anspruch 1, das eine Motorsteuerungsplatine (10) und eine Kommunikationssteuerungsplatine (20) umfasst, wobei die Motorsteuerungsplatine (10) eine zentrale Verarbeitungseinheit (11) und eine Speichereinheit (12), eine Motorsteuerungseinheit (15), die den Motor (50) betreibt und steuert, mindestens eine Erkennungseinheit (16), die die Spannung und den Strom des Batteriesatzes (60) erkennt, eine Timer-Einheit (17) und eine erste Übertragungseinheit (18) umfasst, die alle mit der zentralen Verarbeitungseinheit (11) verbunden sind, wobei die Speichereinheit (12) ferner eine Summationsoperationseinheit (14) umfasst und die Kommunikationssteuerungsplatine (20) eine Verarbeitungskerneinheit (21) und eine Speichereinheit (22), eine Timer-Einheit (23), ein GPS-Modul (24), das mit mindestens einem externen Positionierungs-Satellitensystem (70) verbunden werden kann, eine zweite Übertragungseinheit (26), die mit der ersten Übertragungseinheit (18) verbunden werden kann, und eine Kommunikationseinheit (27) umfasst, die Daten an mindestens einen externen Cloud-Server (80) überträgt, die alle mit der Verarbeitungskerneinheit (21) verbunden sind, wobei die Speichereinheit (22) ferner eine Datenkonsolidierungseinheit (25) umfasst.

## Revendications

1. Méthode de calcul d'émissions de carbone d'un véhicule mobile sur la base de la consommation d'énergie électrique du moteur, qui est applicable à un module de commande (100) d'un véhicule mobile qui peut être mis en action pour commander un ensemble de batteries (60) afin d'entraîner un moteur (50), le module de commande (100) comprenant au moins une unité centrale de traitement (31), et une unité de stockage (32), une unité de commande de moteur (35) qui commande le moteur (50), au moins une unité de détection (36) qui détecte une tension et un courant de l'ensemble de batteries (60), une unité de minuterie (37), un module GPS (38) qui peut être connecté à au moins un système de positionnement par satellite externe (70), et une unité de communication (39) qui transmet des données à au moins un serveur en nuage externe (80), tous en connexion avec l'unité centrale de traitement (31), où l'unité de stockage (32) comprend en outre une unité d'opération de sommation (34) et une unité de consolidation de données (33), les étapes de la méthode de calcul d'émissions de carbone comprenant :
(a) l'unité centrale de traitement (31) fonctionne pour fournir de l'électricité au véhicule mobile afin de démarrer le trajet : l'unité centrale de traitement (31) fonctionne pour activer l'ensemble de batteries (60) afin de se préparer à fournir un courant et une tension au module de commande (35) pour exécuter un trajet, et attendre qu'un utilisateur déclenche de manière externe le moteur (50) pour entraîner un mouvement du véhicule mobile, puis passer à l'étape (b) ;
(b) l'unité centrale de traitement (31) déclenche le calcul de consommation d'énergie électrique d'activation de trajet : après que le moteur (50) a été déclenché de manière externe par l'utilisateur, l'unité de détection (36) est utilisée pour détecter si l'augmentation d'une tension instantanée de l'alimentation électrique provenant de l'ensemble de batteries (60) pour entraîner le moteur (50) se prolonge pendant une période de temps qui atteint une valeur prédéterminée de l'unité de minuterie, par laquelle un déclenchement interne est réalisé pour passer à l'étape (c), et également l'unité centrale de traitement (31) calcule la consommation d'énergie électrique du déclenchement externe, la consommation d'énergie électrique du déclenchement externe étant définie comme une consommation d'énergie électrique de déclenchement et stockée dans l'unité de stockage, où l'étape (b) est mise en oeuvre par le démarrage du trajet, la transmission des données de démarrage au serveur en nuage, telles que la consommation d'énergie électrique totale et les informations de position actuelle, la définition de la condition de déclenchement, l'addition de la consommation d'énergie électrique unitaire instantanée et la totalisation pour générer la consommation d'énergie électrique totale ;
(c) l'unité centrale de traitement (31) acquière le paramètre de mesure de fréquence unitaire du trajet selon une haute fréquence définie : en utilisant le module GPS (38) pour lire, selon une haute fréquence définie par l'unité de minuterie (37), des informations de position du véhicule mobile, et l'unité de détection (36) mesure, selon une haute fréquence définie, le courant et la tension fournis au module de commande (100), et passe à l'étape (d) ;
(d) l'unité centrale de traitement (31) calcule la consommation d'énergie électrique unitaire : en calculant la consommation d'énergie électrique du moteur (50) selon le courant et la tension mesurés par l'unité de détection (36), la consommation d'énergie électrique étant définie comme la consommation d'énergie électrique unitaire, et passe à l'étape (e) ;
(e) l'unité centrale de traitement (31) additionne la consommation d'énergie électrique unitaire du trajet afin de générer une consommation d'énergie électrique totale à télécharger vers le serveur en nuage (80) par l'intermédiaire de l'unité de communication (39) : selon une condition définie pour le temps de téléchargement, l'unité centrale de traitement (31) additionne les consommations électriques unitaires qui sont déjà calculées mais non additionnées afin de générer une consommation d'énergie électrique totale, et télécharge la consommation d'énergie électrique totale et les informations de position vers le serveur en nuage (80) par l'intermédiaire de l'unité de communication (39), et passe à l'étape (f) ;
(f) l'unité centrale de traitement (31) détermine si le déclenchement de la fin du trajet est reçu ou non : elle détermine si le déclenchement de la fin du trajet est reçu ou non, et les étapes (c) à (e) sont exécutées de manière cyclique si le déclenchement de la fin du trajet n'est pas reçu, et sinon, elle passe à l'étape (g) si le déclenchement de la fin du trajet est reçu ; et
(g) fin du trajet : l'unité centrale de traitement (31) télécharge les données finales par l'intermédiaire de l'unité de communication (39), incluant, mais sans s'y limiter, la consommation d'énergie électrique totale et les informations de position, vers le serveur en nuage (80) désigné lorsque le déclenchement de la fin du trajet est reçu, de sorte que le serveur en nuage (80) convertit la consommation d'énergie électrique de déclenchement, la consommation d'énergie électrique totale et les informations de position téléchargées pendant le trajet en émissions de carbone afin de les additionner pour former les émissions de carbone totales du trajet pour des opérations ultérieures d'échange de crédits carbone.

2. Méthode de calcul d'émissions de carbone d'un véhicule mobile sur la base de la consommation d'énergie électrique du moteur selon la revendication 1,
où la valeur prédéterminée de l'unité de minuterie pour détecter le temps de maintien de l'augmentation de la tension instantanée pour entraîner le moteur (50) à l'étape (b) du calcul de la consommation d'énergie électrique de déclenchement de l'activation du trajet est de 0,1 seconde.

3. Méthode de calcul d'émissions de carbone d'un véhicule mobile sur la base de la consommation d'énergie électrique du moteur selon la revendication 1,
où la haute fréquence définie par l'unité de minuterie (37) pour le module GPS (38) à l'étape (c) d'acquisition du paramètre de mesure de fréquence unitaire du trajet selon la haute fréquence définie consiste à lire les informations de position du véhicule mobile une fois toutes les 10 secondes.

4. Méthode de calcul d'émissions de carbone d'un véhicule mobile sur la base de la consommation d'énergie électrique du moteur selon la revendication 1,
où la haute fréquence définie par l'unité de minuterie (37) pour l'unité de détection (36) à l'étape (c) d'acquisition du paramètre de mesure de fréquence unitaire du trajet selon la haute fréquence définie consiste à mesurer les informations de courant et de tension entrées dans le module de commande (100) depuis l'ensemble de batteries (60) une fois toutes les 0,1 seconde.

5. Méthode de calcul d'émissions de carbone d'un véhicule mobile sur la base de la consommation d'énergie électrique du moteur selon la revendication 1,
où le temps de téléchargement à l'étape (e) d'additionner de consommation d'énergie électrique unitaire du trajet afin de générer la consommation d'énergie électrique totale pour le téléchargement vers le nuage est un téléchargement toutes les 60 secondes.

6. Module de commande (100) afin d'exécuter la méthode de calcul d'émissions de carbone d'un véhicule mobile sur la base de la consommation d'énergie électrique du moteur selon la revendication 1, comprenant un tableau de commande du moteur (10) et un tableau de commande de communication (20), où le tableau de commande du moteur (10) comprend une unité centrale de traitement (11) et une unité de mémoire (12), une unité de commande du moteur (15) actionnant et commandant le moteur (50), au moins une unité de détection (16) qui détecte la tension et le courant de l'ensemble de batteries (60), une unité de minuterie (17) et une première unité de transmission (18), toutes connectées à l'unité centrale de traitement (11), où l'unité de mémoire (12) comprend en outre une unité d'opération de sommation (14), et le tableau de commande de communication (20) comprend une unité centrale de traitement (21) et une unité de stockage (22), une unité de minuterie (23), un module GPS (24) qui peut être connecté à au moins un système de positionnement par satellite externe (70), une deuxième unité de transmission (26) qui peut être connectée à la première unité de transmission (18), et une unité de communication (27) qui transmet des données à au moins un serveur en nuage externe (80), tous connectés à l'unité centrale de traitement (21), où l'unité de stockage (22) comprend en outre une unité de consolidation de données (25).
